# EUROPÄISCHE PATENTSCHRIFT

(11) **EP 1 013 957 B1**
(45) Veröffentlichungstag und Bekanntmachung des Hinweises auf die Patenterteilung: **03.05.2006**
(21) Anmeldenummer: 99123385.9
(22) Anmeldetag: 24.11.1999
(51) Int. Cl.: F16D 51/28, F16D 65/12

(54) **Bremseinheit mit einem nichtmetallischen Reibring**
Brake unit with a non-metallic friction ring
Unité de frein avec anneau de friction non-métallique

(30) Priorität: 23.12.1998 DE 19859616
(43) Veröffentlichungstag der Anmeldung: 28.06.2000
(73) Patentinhaber: DaimlerChrysler AG, 70567 Stuttgart (DE)
(72) Erfinder: Näumann, Emil, 73061 Ebersbach (DE); Riedel, Hans-Georg, 75177 Pforzheim (DE); Sokolowsky, Detlef, 73732 Esslingen (DE); Spangemacher, Björn, 71065 Sindelfingen (DE)

(56) Entgegenhaltungen:
- DE-A- 4 446 017
- DE-U- 29 710 533

## Beschreibung

Die Erfindung betrifft eine Bremseinheit mit einem nichtmetallischen Reibring nach dem Oberbegriff des Patentanspruchs 1.

Eine gattungsgemäße Bremseinheit geht z.B. aus der DE 297 10 533 U1 als bekannt hervor. Die Bremseinheit umfaßt einen keramischen Reibring, der mit Hilfe von Befestigungselementen direkt, also unter Verzicht auf einen Bremsscheibentopf, an eine Radnabe angebunden ist. Ein solcher Aufbau der Bremseinheit ermöglicht eine erhebliche Verkleinerung des Innendurchmessers des Reibrings und somit - bei im wesentlichem gleichem Außenradius - eine erhebliche Vergrößerung der vom Bremsbelag überstrichenen Reibfläche. Die Anbindung des Reibrings direkt an die Nabe hat den zusätzlichen Vorteil, daß durch den Wegfall von Zwischenelementen mit geringerem Aufwand eine höhere Planlaufgenauigkeit der Bremseinheit erreicht werden kann. Weiterhin sind nichtmetallische Reibringe im Vergleich zu metallischen Reibringen viel verschleißfester und haben daher eine wesentlich höhere Lebensdauer. Eine Bremseinheit mit einem keramischen Reibring, der direkt an die Radnabe angebunden ist, vereint daher den Vorteil einer großen Bremsfläche und somit hohen Bremskraft mit demjenigen einer langen Lebensdauer.

Allerdings treten bei Reibringen aus keramischen Verbundstoffen wesentlich höhere Temperaturen auf als bei der Verwendung metallischer Reibringe. Dies hat eine erhebliche thermische Belastung der in der Umgebung der Bremseinheit gelegenen Bauteile zur Folge, insbesondere dann, wenn, wie im vorliegenden Fall, der Reibring direkt an die Radnabe angebunden wird und deswegen kein wärmedispergierendes Zwischenstück zwischen Reibring und Nabe vorgesehen ist. Weiterhin sind keramische Reibringe sehr spröde und hart. Weisen die auf dem Reibring und der Nabe vorgesehenen Befestigungselemente, mit Hilfe derer der Reibring an die Nabe angebunden ist, fertigungsbedingte Ungenauigkeiten auf, so kann der Reibring aufgrund seiner vernachlässigbaren Plastizität sich auch im Betrieb nicht so verformen, daß diese Ungenauigkeiten ausgeglichen werden. Die Folge ist eine ungleichmäßige Beteiligung der Befestigungselemente an der Drehmomentübertragung und, dadurch bedingt, ein schnellerer Verschleiß derjenigen Befestigungselemente, die den Großteil der Drehmomentübertragung leisten und daher im Betrieb besonders stark belastet werden.

In der nachveröffentlichten (Artikel 54(3) EPÜ) EP 0987461 A1 wird eine Bremseinheit beschrieben. Es ist eine Bremseinheit mit Bremsscheibe aus Keramik und einer Nabe aus einem anderen Material vorgesehen, die sich mit ihren einander zugekehrten Rändern radial überlappen und mittels eines Kranzes von die überlappenden Ränder axial durchdringenden Befestigungsbolzen mechanisch verbunden ist. In der Bremsscheibe sind Mitnahmebohrungen oder Mitnahmeschlitze vorgesehen, die plastisch ausgekleidet sind. Als plastische Auskleidung können Hülsen vorgesehen werden, die durch einen Längsschlitz in der Hülse radial elastisch gemacht werden können.

Der Erfindung liegt die Aufgabe zugrunde, eine gattungsgemäße Bremseinheit mit einem keramischen, direkt an die Radnabe angebundenen Reibring so weiterzuentwickeln, daß ein gleichmäßiger Drehmomentübertrag zwischen Reibring und Nabe sichergestellt ist, eine hohe Wärmedämmung zwischen Reibring und Nabe gewährleistet ist und ein Ausgleich der unterschiedlichen thermischen Ausdehnungen in radialler Richtung erfolgen kann.

Die Aufgabe wird erfindungsgemäß durch die Merkmale des Anspruchs 1 gelöst.

Danach wird die Kontaktfläche zwischen Reibring und den mit der Nabe verbundenen Befestigungselemente mit einer plastisch verformbaren, wärmedämmenden Schicht versehen. Diese Schicht entkoppelt den Reibring thermisch von der Nabe und mindert somit die Wärmeeinleitung vom Reibring in die Nabe. Weiterhin verformt sich die Schicht aufgrund ihrer plastischen Eigenschaften unter Last, so daß sich im Betrieb eine gleichmäßige Belastung aller Befestigungselemente und somit eine gleichmäßige Beteiligung aller Befestigungselemente an der Drehmomentübertragung zwischen Reibring und Nabe einstellt.

Wird der Reibring an die Nabe mittels eines Kranzes von Bolzen angebunden, welche die überlappenden Ränder des Reibrings und der Nabe axial durchdringen, so wird die plastisch verformbare, wärmedämmende Schicht zwischen dem Reibring und den Bolzen zweckmäßigerweise durch Hülsen aus einem plastisch verformbaren Material dargestellt, die sich unter Last so verformen, daß sich eine gleichmäßige Belastung aller Befestigungselemente und aller Lochlaibungen des Reibrings einstellt. Als Hülsenmaterial wird dabei ein wärmedämmender Werkstoff gewählt, oder die Hülsen werden mit einer zusätzlichen wärmedämmenden Beschichtung versehen, um die Wärmeeinleitung vom Reibring zur Nabe möglichst gering zu halten (siehe Patentanspruch 2).

Zur Aufnahme der Bolzen weist die Nabe zweckmäßigerweise radiale Mitnahmeschlitze und der Reibring entsprechende Bohrungen auf, die eine belastungsarme Dehnung zwischen Nabe und Reibring ermöglichen und gleichzeitig eine Zentrierung des Reibrings sicherstellen (siehe Patentanspruch 3).

In einer alternativen Ausgestaltung wird der Innenrand des Reibrings mittels einer Keilwellenverbindung mit der Nabe verbunden (siehe Patentanspruch 4). Dies bietet gegenüber herkömmlichen Verbindungen den Vorteil einer geringeren Zahl von Einzelteilen und ermöglicht somit Kostenreduktionen. Die Drehmomentübertragung zwischen Nabe und Reibring erfolgt in diesem Fall über die Flanken der Keilwelle. Das Flankenprofil ist hierbei so gewählt, daß eine Selbstzentrierung des Reibrings auf der Nabe erfolgt und daß gleichzeitig eine kraftarme radiale Dehnung der Nabe gewährleistet ist und daß bei thermischen und mechanischen Verformungen der Nabe möglichst geringe Kräfte zwischen Nabe und Reibring auftreten. Die Kontaktfläche zwischen Reibring und Nabe ist mit einer plastisch verformbaren Schicht versehen, um eine möglichst gleichmäßige Drehmomentübertragung sicherzustellen; zur Minimierung des Wärmeübertrags zwischen Nabe und Reibring wird die Kontaktfläche zwischen Nabe und Reibring möglichst klein gestaltet und mit einer Wärmedämmschicht versehen.

Um eine hohe Festigkeit des keramischen Reibrings zu gewährleisten, empfiehlt es sich, den Keramikwerkstoff durch Zugabe von Fasermaterial zu verstärken (siehe Patentanspruch 5).

Die direkte Anbindung des Reibrings an die Radnabe gestattet eine Steigerung der vom Bremsbelag überstrichenen Reibfläche von bis zu 40% im Vergleich zur herkömmlichen Anbindung des Reibrings mit Hilfe eines Zwischenstücks. Eine noch deutlichere Vergrößerung der Reibfläche kann erreicht werden, wenn zwei (oder mehr) Reibringe auf der Nabe angeordnet sind (siehe Patentanspruch 6). Beim Bremsvorgang werden die Reibringe von zwei äußeren Bremsbelägen gegen einen zwischen den Reibringen angeordneten Bremsbelag gepreßt (siehe Patentanspruch 8). Nach dem Bremsvorgang werden die Reibringe durch eine Rückstellfeder gegenseitig distanziert, so daß der mittlere Bremsbelag frei zwischen den beiden Reibringen läuft (siehe Patentanspruch 7). Durch die Verwendung einer solchen Doppelscheibenbremse mit Nabenanbindung kann die Reibfläche gegenüber herkömmlichen Bremsscheiben um bis zu 140% gesteigert werden. Ein weiterer Vorteil der Doppelscheibenbremse ist die einfache Gestaltung der Reibringe, da auf eine aufwendige Belüftung verzichtet werden kann.

Die erfindungsgemäße Bremseinheit beschränkt sich nicht auf den Einsatz in Kraftfahrzeugen, sondern ist in gleichem Maße auch für Flugzeuge und Schienenfahrzeuge anwendbar. Ein wichtiger Vorteil der erfindungsgemäßen Bremseinheit besteht dabei darin, auch bei starker Begrenzung des für die Bremse verfügbaren Raumes eine große Bremsfläche zur Verfügung zu stellen.

Im folgenden ist die Erfindung anhand einiger in den Zeichnungen dargestellter Ausführungsbeispiele erläutert; dabei zeigen:
- Fig. 1: einen Meridian-Teilschnitt einer Bremseinheit, die einen Reibring und eine Nabe umfaßt;

- Fig. 2: eine Ansicht gemäß dem Schnitt II-II in Figur 1;
- Fig. 3: einen Meridian-Teilschnitt einer alternativen Ausführung einer Bremseinheit;
- Fig. 4: eine Ansicht der Bremseinheit gemäß dem Schnitt IV-IV in Figur 3;
- Fig. 5: eine Ansicht der Nabe gemäß dem Schnitt IV-IV in Figur 3;
- Fig. 6: eine Ansicht der Nabe gemäß dem Schnitt VI-VI in Figur 5;
- Fig. 7: einen Meridian-Teilschnitt einer Bremseinheit mit doppeltem Reibring in einer Ausgestaltung als Festsattel-Bremse;
- Fig. 8: eine Ansicht der Bremseinheit gemäß dem Schnitt VIII-VIII in Figur 7;
- Fig. 9: einen Radialteilschnitt der Bremseinheit mit doppeltem Reibring gemäß dem Schnitt IX-IX in Figur 8.

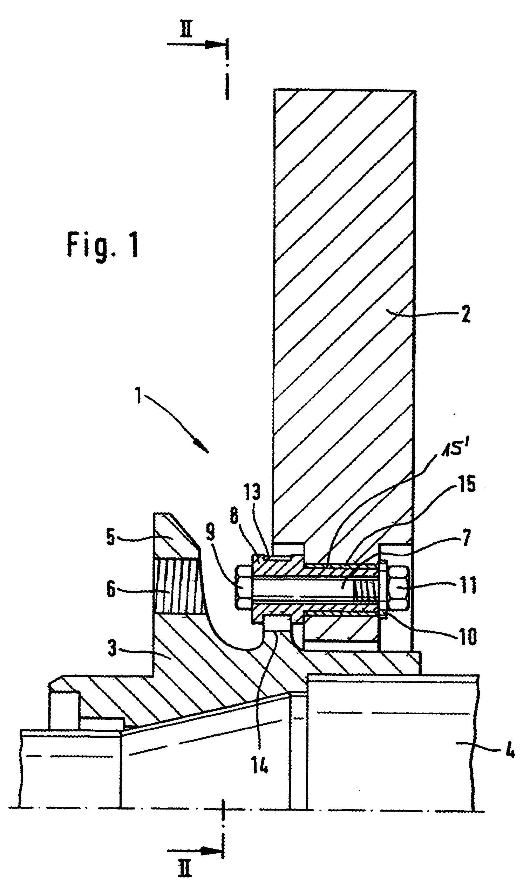

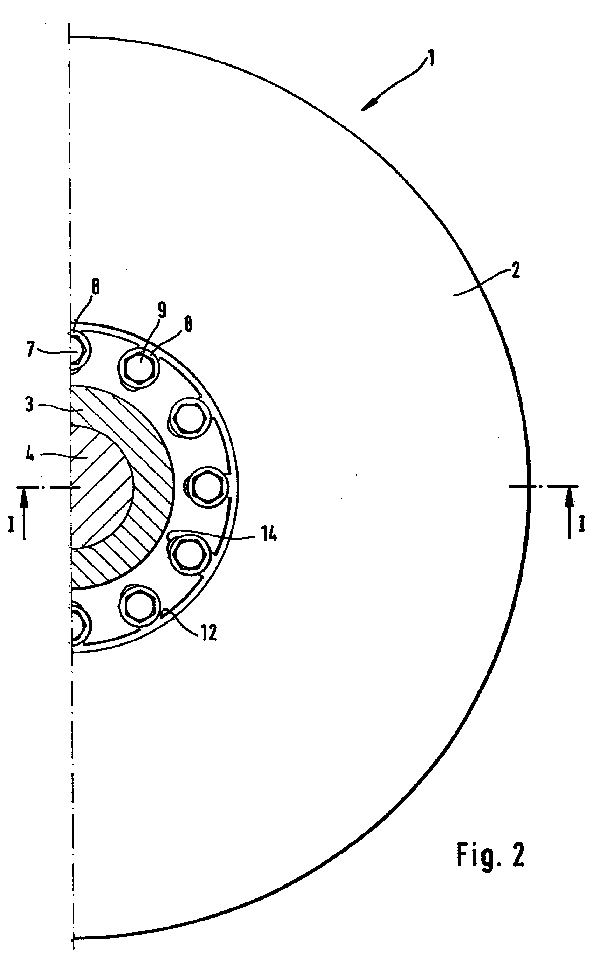

Figuren 1 und 2 zeigen eine erfindungsgemäße Bremseinheit 1. Die Bremseinheit 1 umfaßt einen Reibring 2, der auf einer Nabe 3 befestigt ist. Die Nabe 3 ist auf einem Achsschenkel 4 gelagert. Die Nabe 3 trägt weiterhin einen Flansch 5 mit Gewindebohrungen 6 zum Anschluß eines (nicht gezeigten) Rades. Der Reibring 2 ist mittels Befestigungselementen 7 an der Nabe 3 befestigt. Jedes Befestigungselement 7 besteht aus einem Befestigungsbolzen 8, einer sich durch den Befestigungsbolzen 8 erstreckenden Befestigungsschraube 9, einer auf das Ende der Befestigungsschraube 9 aufgesteckten Unterlegscheibe 10 sowie einer Sechskantmutter 11. Im Bereich der Befestigungselements 7 liegt somit eine radiale Überlappung der Nabe 3 und Reibrings 2 vor.

Der Reibring 2 besteht aus einem keramischen Verbundwerkstoff. Solche Verbundwerkstoffe besitzen im Gegensatz zu Metallen einen äußerst geringen Wärmeausdehnungskoeffizient. Der Reibring 2 erleidet im Gebrauchszustand starke Erhitzung, die infolge von Wärmeleitung zu einer Wärmeausdehnung der Nabe 3 führt, die größer als die des Reibrings 2 sein kann. Um eine kraftarme gegenseitige Verschiebung zwischen dem Reibring 2 und der Nabe 3 sicherzustellen und somit Beschädigungen des Reibrings 2 durch die unterschiedlich starke Wärmeausdehnung von Reibring 2 und Nabe 3 zu verhindern, ist die Nabe 3 zur Aufnahme der Befestigungselemente 7 mit radialen Schlitzen 12 versehen, in denen die Befestigungsbolzen 8 in Radialrichtung gleiten können. Die Breite der Schlitze 12 entspricht der Breite des Befestigungsbolzens 8 in einem die Nabe 3 berührenden Bereich 13. Die Schlitze 12 haben in Radialrichtung eine Tiefe 14, die größer ist als die maximale radiale Eindringtiefe der Befestigungsbolzen 8 in die Schlitze 12, die sich im Fall eines kalten Reibrings 2 und einer warmen Nabe 3 ergibt.

Der Schiebesitz der Nabe 3 ermöglicht radiale Verschiebungen zwischen Reibring 2 und Nabe 3. Durch diese sogenannte "schwimmende" Befestigung bleibt der Reibring 2 zentriert und kann über die Befestigungselemente 7 ein Drehmoment auf die Nabe 3 übertragen. Der Reibring 2 wird durch die Befestigungsbolzen 8 wärmetechnisch entkoppelt, so daß die Wärmeeinleitung vom Reibring 2 in die Nabe 3 erheblich verringert wird.

Um etwaige Teilungsungenauigkeiten zwischen der Lage der Befestigungselemente 7 im Reibring 2 und der Lage der Schlitze 12 in der Nabe 3 auszugleichen und um alle Befestigungselemente 7 in gleichem Maße an der Drehmomentübertragung zwischen Reibring 2 und Nabe 3 zu beteiligen, sind zwischen Reibring 2 und Befestigungsbolzen 8 Hülsen 15 vorgesehen, die eine Wandstärke von ca. 1 mm haben und mit einem über ihre gesamte Mantelhöhe verlaufenden Schlitz versehen sind. Diese Hülsen 15 können aus einem metallischen Werkstoff, insbesondere Kupfer, bestehen, oder aber aus kohlenstoffaser-verstärktem Kohlenstoff gefertigt sein. Sie stellen eine wärmedämmende, plastisch verformbare Schicht 15' zwischen dem Reibring 2 und den Befestigungsbolzen 8 dar. Durch Belastungen der Bremse verformen sich die Hülsen 15 und stellen somit gleichmäßige Kräfte auf alle Befestigungselemente 7 und Lochlaibungen des keramischen Reibrings 2 sicher, der aufgrund seiner Sprödigkeit eine relativ geringe Schadenstoleranz besitzt. Die wärmedämmenden Hülsen 15 zwischen Reibring 2 und Befestigungsbolzen 8 bewirken weiterhin eine Wärmedämmung zwischen Reibring 2 und Nabe 3.

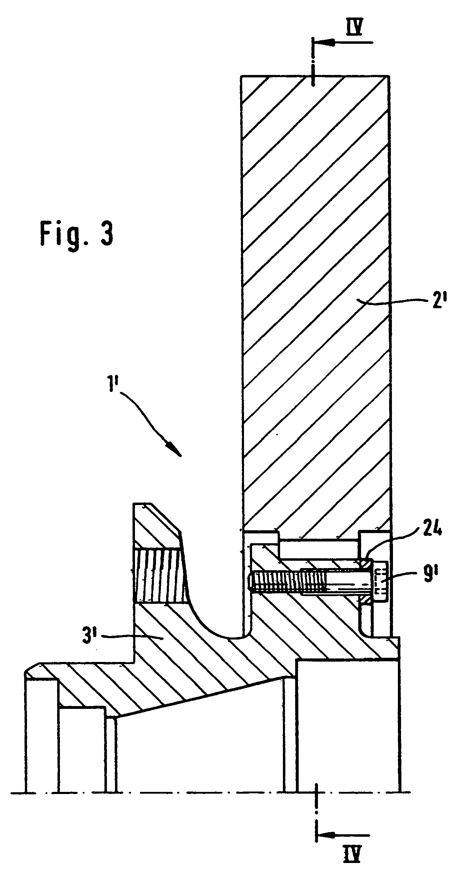

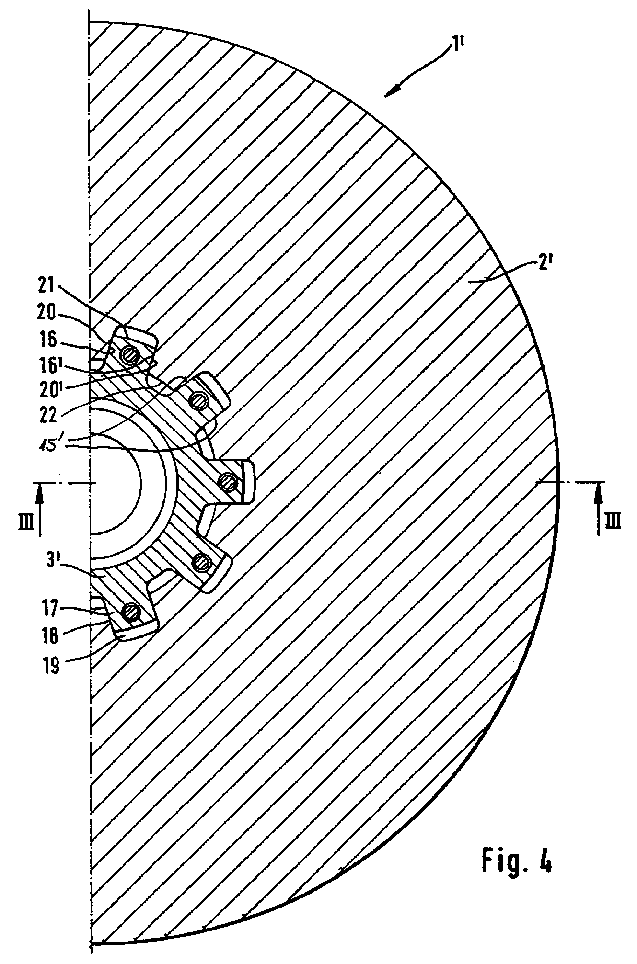

Figuren 3 bis 6 zeigen eine alternative Ausgestaltung einer erfindungsgemäßen Bremseinheit 1', bei der die Anbindung des Reibrings 2' an die Nabe 3' mittels eines Keilwellenprofils erfolgt. Der dem Reibring 2' zugewandte Rand der Nabe 3' ist als stirnverzahnte Welle ausgebildet, die in eine Innenverzahnung auf dem der Nabe 3' zugewandten Rand des Reibrings 2' eingreift. Im Bereich der Verzahnung weisen Nabe 3' und Reibring 2' daher eine radiale Überlappung auf. Die Befestigungselemente 7 zwischen Reibring 2' und Nabe 3' werden daher in diesem Fall durch die Zähne 17 der Keilwellenverzahnung gebildet.

Die beiden Flanken 16, 16' eines auf dem Außenrand der Nabe 3' befindlichen Zahnes 17 sind so gestaltet, daß sie im radialen Überlappungsbereich 18 von Nabe 3' und Reibring 2' parallel zueinander verlaufen. Der Reibring 2' weist entsprechende Aussparungen 19 auf, deren Flanken 20 ebenfalls im radialen Überlappungsbereich 18 von Nabe 3' und Reibring 2' parallel zueinander verlaufen. Diese Parallelität der Flanken 16, 16', 20, 20' gewährleistet bei erhitzungsbedingter Ausdehnung der Nabe 3' ein kraftarmes Gleiten der Zahnflanken 16, 16' der Nabe 3' in der Aussparung 19 des Reibrings 2'. Dieses kraftarme Gleiten muß auch dann gewährleistet sein, wenn zwischen Nabe 3' und Reibring 2' große Wärmedehnungsunterschiede vorliegen. Um dies sicherzustellen, müssen die Flankenpaare 16,16' und 20,20' auch über eine gewisse Distanz außerhalb des direkten Überlappungsbereiches 18 hinweg parallel verlaufen. Somit müssen die Flankenpaare 20,20' des Reibringverzahnung radial außerhalb des Kopfkreises 21 der Nabenverzahnung parallel zueinander verlaufen, und die Flankenpaare 16, 16' der Nabenverzahnung müssen radial innerhalb des Kopfkreises 22 der Reibringverzahnung parallel zueinander verlaufen. Durch die parallele Flankengestaltung ist gewährleistet, daß keine radiale Verklemmung zwischen Nabe 3' und Reibring 2' entsteht.

Diese Keilwellenverzahnung zwischen Reibring 2' und Nabe 3' gestattet eine kraftarme radiale Relativbewegung von Reibring 2' und Nabe 3', wobei die Gestaltung der Flanken 16,16',20,20' eine Zentrierung des Reibrings 2' sicherstellt. Die Drehmomentübertragung von Reibring 2' auf die Nabe 3' erfolgt über die einander gegenüberliegenden Flankenpaare 16,20 bzw. 16',20'.

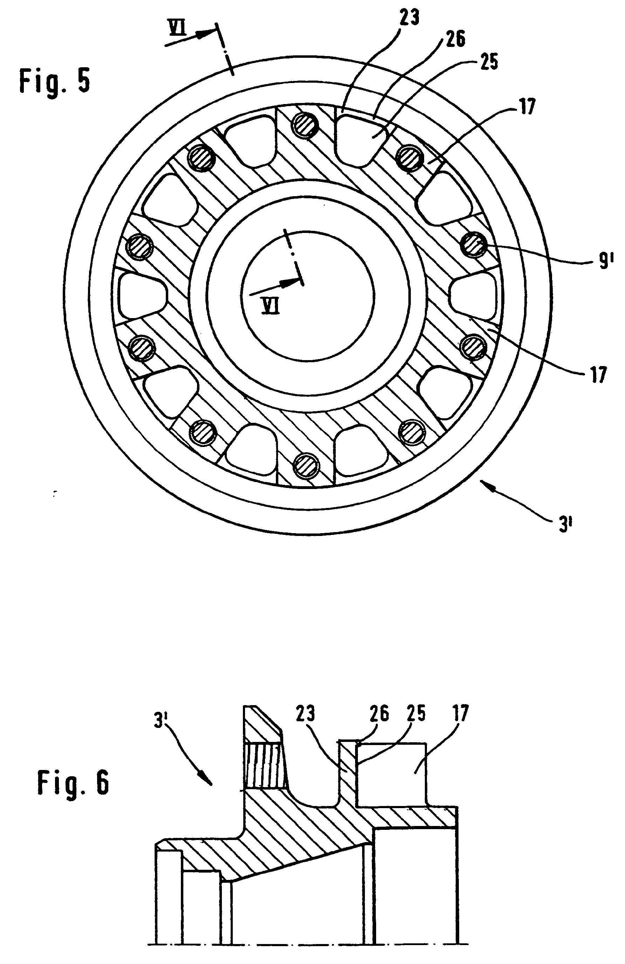

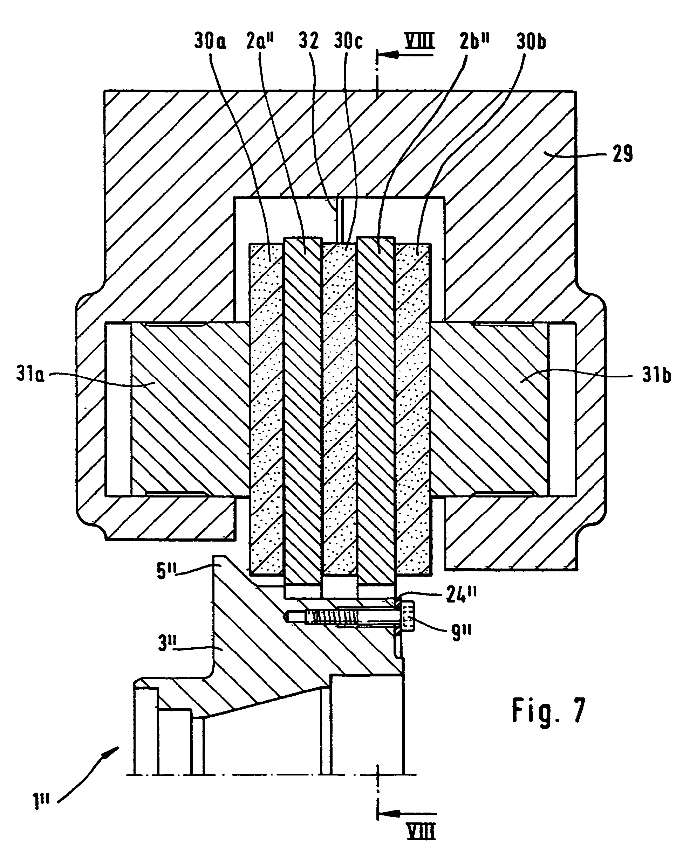

Zur axialen Positionierung des Reibrings 2' auf der Nabe 3' trägt die Nabe 3' einen Flansch 23, der sich endseitig in Axialrichtung an die Zähne 17 anschließt (siehe Figuren 5 und 6). Der Reibring 2' ist gegenüber der Nabe 3' axial mittels eines radialsymmetrischen umlaufenden Sicherungsringes 24 fixiert, der mit Hilfe von Befestigungsschrauben 9' gegenüber der Nabe 3' verspannt ist.

Zur Verminderung der Anlagefläche (und somit zur Verminderung der Wärmeübertragung) zwischen Nabe 3' und Reibring 2' weist der Flansch auf der dem Reibring 2' gegenüberliegenden Seite taschenförmige Einfräsungen 25 auf, so daß der Reibring 2' nur auf schmalen Stegen 26 des Flansches 23 aufliegt. Um die Wärmeeinleitung zu minimieren, sind diese Stege 26 zusätzlich mit einem Wärmedämmstoff beschichtet.

Zur Korrektur von Teilungsungenauigkeiten der zwischen Reibring 2' und Nabe 3' gebildeten Keilwelle und zur Minimierung der Wärmeeinleitung vom Reibring 2' zur Nabe 3' sind die Kontaktbereiche zwischen den gegenüberliegenden Flankenpaaren 16,20 bzw. 16',20' mit einer plastisch verformbaren, wärmedämmenden Schicht 15' versehen. Unter Belastungen der Bremse verformt sich diese Schicht 15' und gewährleisten eine Gleichverteilung der auftretenden Kräfte auf alle Flankenpaare 16,20 bzw. 16',20'. Diese Schicht 15' kann aus lokal eingesetzten Plättchen bestehen; alternativ kann zwischen Reibring 2' und Nabe 3' im Bereich der Verzahnung ein wärmedämmender, plastisch verformbarer Ring eingebracht werden, der die Außenverzahnung der Nabe 3' und/oder die Innenverzahnung des Reibrings 2' auskleidet. Zur thermischen Entkopplung zwischen Nabe 3' und Reibring 2' können weiterhin Faserdämmaterialien an den Kontaktflächen 16,20 und 16',20' sowie im Bereich des Steges 26 verwendet werden.

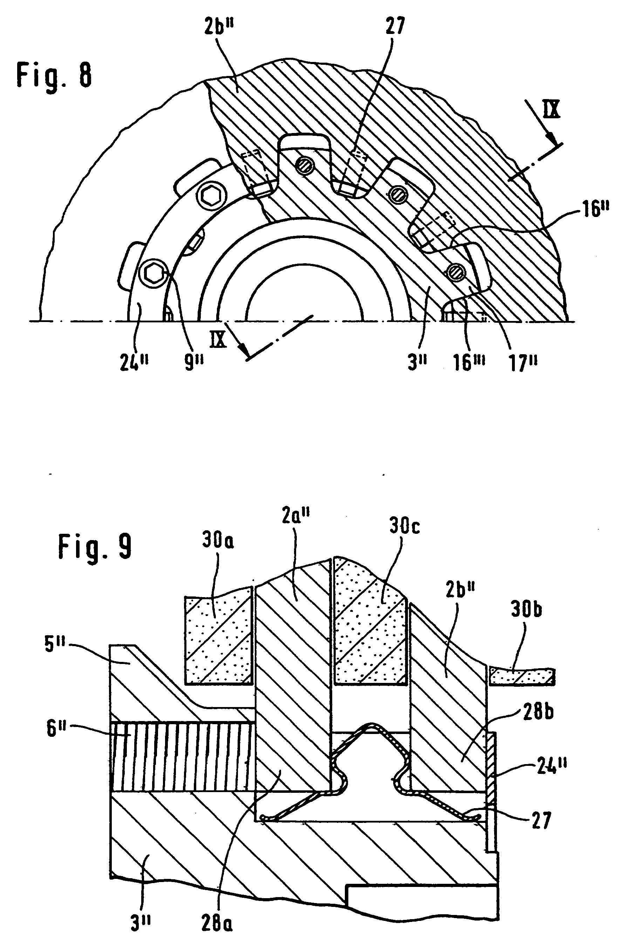

Figuren 7 bis 9 zeigen eine weitere Ausgestaltung einer Bremseinheit 1'', bei der mittels eines Keilwellenprofils zwei Reibringe 2a'' und 2b'' an eine Nabe 3'' angebunden sind. Beide Reibringe 2a" und 2b'' sind an den der Nabe 3'' zugewandten Rändern mit Innenverzahnungen versehen, die in eine stirnverzahnte Welle auf dem Außenrand der Nabe 3'' eingreifen. Wie im oben beschriebenen Ausführungsbeispiel verlaufen auch hier die Flanken 16'' und 16''' eines auf dem Außenrand der Nabe 3'' befindlichen Zahnes 17'' parellel zueinander. Dies gewährleistet ein kraftarmes Gleiten der Reibringe 2a" und 2b'' relativ zur Nabe 3'' und stellt gleichzeitig eine Zentrierung der Reibringe 2a'' und 2b'' sicher. Wie im Ausführungsbeispiel der Figur 3 beschrieben, sind auch hier entlang der Auflageflächen der zwischen den Reibringen 2a" und 2b" und der Nabe 3'' gebildeten Keilwelle Plättchen aus einem plastisch verformbaren, wärmedämmenden Werkstoff angeordnet.

Die Reibringe 2a'' und 2b'' sind gegenüber der Nabe 3'' axial mittels eines umlaufenden Sicherungsrings 24'' fixiert, der mit Hilfe von Befestigungsschrauben 9'' gegenüber der Nabe 3'' verspannt ist. Der Reibring 2a'' wird hierbei gegen einen auf der Nabe 3'' vorgesehenen Flansch 5'' gedrückt, der außerdem Gewindebohrungen 6'' zur Befestigung eines Rades enthält. Zwischen den beiden Reibringen 2a" und 2b" befinden sich Rückstellfedern 27, die sicherstellen, daß die Reibringe 2a'' und 2b'' im Nichtgebrauchsfall einen bestimmten Mindestabstand zueinander einnehmen. Die Rückstellfedern 27 sind als metallische Klammern ausgebildet, die zwischen Zähne 28a und 28b der Reibringe 2a'' und 2b'' eingebracht sind. Um die Zahl der zu montierenden Teile zu minimieren, können die Rückstellfedern 27 an den Sicherungsring 24'' angebunden sein oder als Auskragungen des Sicherungsringes 24'' ausgebildet sein.

Figur 7 zeigt den Einsatz der Bremseinheit 1'' mit zwei Reibringen 2a'' und 2b'' in einer Festsattelbremse. Der Festsattel 29 enthält drei Bremsbeläge 30a, 30b und 30c. Die äußeren Bremsbeläge 30a und 30b sind auf Bremszylindern 31a und 31b befestigt, während der mittlere Bremsbelag 30c über ein Blech 32 in der Mitte des Sattels 29 befestigt ist. Bei Betätigung der Bremse werden die äußeren Bremsbeläge 30a und 30b durch die Bremszylinder 31a und 31b von außen gegen die Reibringe 2a'' und 2b'' gedrückt. Dabei werden durch den von den Bremsbelägen 30a und 30b ausgeübten Druck die Rückstellfedern 27 zwischen den Reibringe 2a'' und 2b'' zusammengedrückt, so daß beide Reibringe 2a'' und 2b" gegen den mittleren Bremsbelag 30c gedrückt werden. In diesem Falle tragen also beide Seiten jedes Reibringes 2a'' und 2b'' zur Bremswirkung bei. Verglichen mit dem Ausführungsbeispiel gemäß Figur 3 kann somit (bei gleicher Reibringgröße) die doppelte Reibfläche realisiert werden. Läßt am Ende des Bremsvorgangs der über die Bremszylinder 31a und 31b ausgeübte Bremsdruck nach, so werden die Reibringe 2a'' und 2b'' durch die Rückstellfedern 27 so weit auseinandergedrückt, daß sie den mittleren Bremsbelag 30c nicht mehr berühren. Um dies zu erreichen, sind die Rückstellfedern 27 so dimensioniert, daß sie im Nichtgebrauchszustand der Bremseinheit 1'' die Reibringe 2a'' und 2b'' auf einem gegenseitigen Abstand halten, der etwas größer ist als die Dicke des mittleren Bremsbelags 30c. Durch die Wahl geeigneter Rückstellfeder 27 kann weiterhin erreicht werden, daß die Rückstellung der Reibringe 2a'' und 2b'' angepaßt zur Belagstärke des mittleren Bremsbelags 30c erfolgt. Damit läßt sich auch bei zunehmendem Belagverschleiß ein konstantes Lüftspiel zwischen Belag 30c und Reibringen 2a'' und 2b'' sicherstellen.

Die Anordnung der beiden Reibringe 2a'' und 2b'', die über die Rückstellfedern 27 distanziert werden, bewirkt eine gute Belüftung der Bremseinheit 1'', da zwischen den Reibringen die Luft frei zirkulieren kann.

Alternativ zur in Figur 7 gezeigten Festsattelbremse kann die Bremseinheit 1'' mit zwei Reibringen 2a'' und 2b'' auch in einer Faustsattelbremse zum Einsatz kommen.

## Patentansprüche

1. Bremseinheit mit einem Reibring (2) aus einem keramischen Werkstoff,
- der unmittelbar an eine Nabe (3) angebunden ist,
- wobei die Nabe in Form einer Hülse ausgebildet ist, die einen Achsschenkel umschließt und an der ein Rad befestigt ist,
- wobei der Außenrand der Nabe (3) radial mit dem Innenrand des Reibrings (2) überlappt und in diesem Überlappungsbereich Befestigungselemente (7) zur Anbindung des Reibrings an die Nabe aufweist, **dadurch gekennzeichnet, dass**
die Kontaktfläche zwischen Reibring (2,2',2a'',2b'') und Befestigungselementen (7) mit einer plastisch verformbaren, wärmedämmenden Schicht (15') versehen ist, und
daß die Nabe (3) zur Aufnahme der Befestigungsbolzen (8) radiale Mitnahmeschlitze (12) aufweist, in denen die Befestigungsbolzen (8) in Radialrichtung gleiten können.

2. Bremseinheit nach Anspruch 1,
**dadurch gekennzeichnet,**
- **daß** die Befestigungselemente (7) zwischen Reibring (2) und Nabe (3) durch einen Kranz von Befestigungsbolzen (8) gebildet sind, die die überlappenden Ränder des Reibrings (2) und der Nabe (3) axial durchdringen,
- und **daß** die Befestigungsbolzen (8) mit plastisch verformbarer, wärmedämmender Hülsen (15) ausgekleidet sind.

3. Bremseinheit nach Anspruch 2,
**dadurch gekennzeichnet,**
**daß** die Mitnahmeschlitze (12) eine belastungsarme Dehnung zwischen Nabe und Reibring ermöglichen und gleichzeitig eine Zentrierung des Reibrings sicherstellen.

4. Bremseinheit nach Anspruch 1,
**dadurch gekennzeichnet,**
- **daß** die Befestigungselemente (7) auf der Nabe (3',3'') durch ein Keilwellenprofil am Außenrand der Nabe (3',3'') gebildet sind, in das ein auf dem Innenrand des Reibrings (2',2a'',2b'') vorgesehenes Keilwellenprofil eingreift,
- und **daß** die Kontaktflächen (16,20,16',20',26) zwischen Reibring (2',2a'',2b'') und Nabe (3',3'') mit einer plastisch verformbaren Wärmedämmschicht (15') versehen sind.

5. Bremseinheit nach Anspruch 1,
**dadurch gekennzeichnet,**
**daß** der Reibring (2,2',2a'',2b'') aus einem Reibmaterial aus der Gruppe der faserverstärkten Keramikstoffe besteht.

6. Bremseinheit nach Anspruch 1,
**dadurch gekennzeichnet,**
**daß** die Bremseinheit (1'') zwei Reibringe (2a'',2b'') umfaßt, die parallel zueinander angeordnet und mit der Nabe (3'') verbunden sind.

7. Bremseinheit nach Anspruch 6,
**dadurch gekennzeichnet,**
**daß** zwischen den beiden Reibringen (2a'',2b'') eine Rückstellfeder (27) angeordnet ist, die die Reibringe (2a'',2b'') im Nichtgebrauchszustand auf einem festen Abstand zueinander hält.

8. Bremseinheit nach Anspruch 6,
**dadurch gekennzeichnet,**
**daß** an jedem Reibring (2a'',2b'') beidseitig je ein Bremsbelag (30a,30b,30c) angeordnet ist,
- wobei die Bremsbeläge (30a,30b,30c) auf einem Bremssattel (29) befestigt sind,
- und wobei die beiden zwischen den Reibringen (2a'',2b'') angeordneten Bremsbeläge (30a,30b,30c) fest miteinander verbunden sind und gemeinsam eine Dicke haben, die geringer ist als der Abstand der Reibringe (2a'',2b'') im Nichtgebrauchszustand.

## Claims

1. Brake unit having a friction ring (2) which is made from a ceramic material and
- which is connected directly to a hub (3),
- the hub being formed in the shape of a sleeve which encloses an axle stub and to which a wheel is fastened,
- the outer edge of the hub (3) overlapping radially with the inner edge of the friction ring (2) and having fastening elements (7) in this overlapping region for connecting the friction ring to the hub,
**characterized in that** the contact surface between the friction ring (2, 2', 2a'', 2b'') and fastening elements (7) is provided with a plastically deformable, thermally insulating layer (15'), and
and **in that** the hub (3) has radial driving slots (12) for accommodating the fastening bolts (8), in which radial driving slots (12) the fastening bolts (8) can slide in the radial direction.

2. Brake unit according to Claim 1,
**characterized**
- **in that** the fastening elements (7) between the friction ring (2) and the hub (3) are formed by a ring of fastening bolts (8) which penetrate the overlapping edges of the friction ring (2) and the hub (3) axially,
- and **in that** the fastening bolts (8) are equipped with plastically deformable, thermally insulating sleeves (15).

3. Brake unit according to Claim 2, **characterized in that** the driving slots (12) make a low-load expansion between the hub and the friction ring possible and at the same time ensure centring of the friction ring.

4. Brake unit according to Claim 1,
**characterized**
- **in that** the fastening elements (7) on the hub (3', 3'') are formed by a splined shaft profile on the outer edge of the hub (3', 3''), into which splined shaft profile a splined shaft profile which is provided on the inner edge of the friction ring (2', 2a'', 2b'') engages,
- and **in that** the contact surfaces (16, 20, 16', 20', 26) between the friction ring (2', 2a'', 2b'') and the hub (3', 3'') are provided with a plastically deformable thermally insulating layer (15').

5. Brake unit according to Claim 1,
**characterized**
**in that** the friction ring (2, 2', 2a'', 2b'') is composed of a friction material from the group of fibre-reinforced ceramic materials.

6. Brake unit according to Claim 1,
**characterized**
**in that** the brake unit (1'') comprises two friction rings (2a'', 2b'') which are arranged parallel to one another and are connected to the hub (3'').

7. Brake unit according to Claim 6,
**characterized**
**in that** a restoring spring (27) is arranged between the two friction rings (2a'', 2b''), which restoring spring (27) holds the friction rings (2a'', 2b'') at a fixed distance from one another in the out-of-use state.

8. Brake unit according to Claim 6,
**characterized**
**in that** in each case one brake lining (30a, 30b, 30c) is arranged on both sides of each friction ring (2a'', 2b''),
- the brake linings (30a, 30b, 30c) being fastened on a brake calliper (29),
- and the two brake linings (30a, 30b, 30c) which are arranged between the friction rings (2a'', 2b'') being connected fixedly to one another and together having a thickness which is less than the distance between the friction rings (2a'', 2b'') in the non-use state.

## Revendications

1. Unité de frein avec un anneau de friction (2) constitué d'un matériau céramique,
- qui est relié directement à un moyeu (3),
- le moyeu étant réalisé sous forme de douille, qui entoure une fusée d'essieu et à laquelle est fixée une roue,
- le bord extérieur du moyeu (3) chevauchant radialement le bord intérieur de l'anneau de friction (2) et présentant dans cette région de chevauchement des éléments de fixation (7) pour relier l'anneau de friction au moyeu,
**caractérisée en ce que**
la surface de contact entre l'anneau de friction (2, 2', 2a", 2b") et les éléments de fixation (7) est pourvue d'une couche (15') calorifuge déformable plastiquement, et
**en ce que** le moyeu (3) présente, pour recevoir les boulons de fixation (8), des fentes d'entraînement radiales (12) dans lesquelles les boulons de fixation (8) peuvent glisser dans la direction radiale.

2. Unité de frein selon la revendication 1,
**caractérisée en ce que**
- les éléments de fixation (7) sont formés entre l'anneau de friction (2) et le moyeu (3) par une couronne de boulons de fixation (8) qui traversent axialement les bords se chevauchant de l'anneau de friction (2) et du moyeu (3),
- et **en ce que** les boulons de fixation (8) sont revêtus de douilles (15) calorifuges, déformables plastiquement.

3. Unité de frein selon la revendication 2,
**caractérisée en ce que**
les fentes d'entraînement (12) permettent une dilatation de faible sollicitation entre le moyeu et l'anneau de friction et garantissent en même temps un centrage de l'anneau de friction.

4. Unité de frein selon la revendication 1,
**caractérisée en ce que**
- les éléments de fixation (7) sont formés sur le moyeu (3', 3") par un profilé d'arbre cannelé sur le bord extérieur du moyeu (3', 3"), dans lequel vient en prise un profilé d'arbre cannelé prévu sur le bord intérieur de l'anneau de friction (2', 2a", 2b"),
- et **en ce que** les surfaces de contact (16, 20, 16', 20', 26) entre l'anneau de friction (2', 2a", 2b") et le moyeu (3', 3") sont pourvues d'une couche (15') calorifuge déformable plastiquement.

5. Unité de frein selon la revendication 1,
**caractérisée en ce que**
l'anneau de friction (2, 2', 2a", 2b") se compose d'un matériau de friction parmi le groupe des substances à base de céramique renforcée par des fibres.

6. Unité de frein selon la revendication 1,
**caractérisée en ce que**
l'unité de frein (1") comprend deux anneaux de friction (2a", 2b") qui sont disposés parallèlement l'un à l'autre et qui sont connectés au moyeu (3").

7. Unité de frein selon la revendication 6,
**caractérisée en ce qu'**
un ressort de rappel (27) est disposé entre les deux anneaux de friction (2a", 2b"), lequel maintient les anneaux de friction (2a", 2b") à un écartement fixe l'un de l'autre dans l'état de non utilisation.

8. Unité de frein selon la revendication 6,
**caractérisée en ce qu'**
une garniture de frein respective (30a, 30b, 30c) est disposée sur chaque anneau de friction (2a", 2b"),
- les garnitures de frein (30a, 30b, 30c) étant fixées sur un étrier de frein (29),
- et les deux garnitures de frein (30a, 30b, 30c) disposées entre les anneaux de friction (2a", 2b") étant connectées fixement l'une à l'autre et ayant ensemble une épaisseur qui est inférieure à l'espacement des anneaux de friction (2a", 2b") dans l'état de non utilisation.
